Europäisches Patentamt

European Patent Office

Office européen des brevets

(11) Veröffentlichungsnummer: **0 211 138 B1**

# EUROPÄISCHE PATENTSCHRIFT

(45) Veröffentlichungstag der Patentschrift: **24.07.91**

(51) Int. Cl.5: **G02B 21/24**

(21) Anmeldenummer: **86103327.2**

(22) Anmeldetag: **12.03.86**

(54) **Mikroskopstativfuss.**

(30) Priorität: **07.06.85 DE 3520475**

(43) Veröffentlichungstag der Anmeldung:
**25.02.87 Patentblatt 87/09**

(45) Bekanntmachung des Hinweises auf die
Patenterteilung:
**24.07.91 Patentblatt 91/30**

(84) Benannte Vertragsstaaten:
**AT CH FR GB LI SE**

(56) Entgegenhaltungen:
**US-A- 4 101 194**
**US-A- 4 210 384**
**US-A- 4 284 327**

(73) Patentinhaber: **Leica Industrieverwaltung
GmbH
Ernst-Leitz-Strasse 30 Postfach 20 20
W-6330 Wetzlar 1(DE)**

(72) Erfinder: **Reinheimer, Günter
Am Berg 11
W-6301 Biebertal(DE)**
Erfinder: **Wieber, Karl
Gartenweg 14
W-6334 Asslar-Berghausen(DE)**
Erfinder: **Lisfeld, Robert
Kirchbodenstrasse 7
W-6331 Ulm-Allendorf(DE)**
Erfinder: **Voigt, Walter
Wilhelmstrasse 36
W-6307 Linden(DE)**

## Beschreibung

Die Erfindung betrifft einen Mikroskopstativfuß zur Aufnahme optischer und elektronischer Bauelemente einer Beleuchtungseinrichtung sowie einer Antriebseinheit für die optischen Bauelemente, mit einem Mittelteil, je einem damit einstückigen, eine Handauflage tragenden Seitenteil und einer den Mikroskopstativfuß abdeckenden Bodenplatte.

Aus der DE-OS 24 51 884 ist eine Mikroskopstativ bekannt, in dessen Fluß ein schalenförmiger Träger für die Aufnahme elektrischer Bauteile befestigbar ist, welche der Beleuchtungssteuerung dienen. Im Inneren des Fußes ist außerdem ein optisches System angeordnet, das einen Lichtstrahl durch ein Projektiv auf einen Kondensor richtet. Für den Zusammenbau und die Wartung der elektrischen Bauteile ist nur der Träger zu handhaben. Hinweise über die Anordnung des optischen Systems und dessen Funktionen sind dieser Offenlegungsschrift nicht entnehmbar.

Bei einem weiteren, bekannten Mikroskopstativ sind optische und elektrische Bauelemente der Beleuchtungseinrichtung im Fuß angeordnet. Dieser weist einen Mittelteil und zwei Seitenteile auf und ist durch eine Bodenplatte abgedeckt. Die Seitenteile tragen Handauflagen und ermöglichen eine ergonomische Armhaltung beim Mikroskopieren. Im Mittelteil des Fußes sind optische Bauelemente als Teil einer Beleuchtungseinrichtung montiert, nämlich eine Beleuchtungslinse, ein Umlenkspiegel und eine variable Leuchtfeldblende. Letztere ist mittels eines im Stativfuß befestigten Rändelknopfes in ihrer Öffnung verstellbar. Eine gleichfalls variable Aperturblende ist bei diesem Mikroskop Bestandteil des Kondensors und wird mittels eines an demselben angeordneten Stellrades- oder -hebels betätigt.

Ein derartiges Mikroskopstativ weist nicht zuletzt aufgrund der Ausbildung seines mit Versteifungsrippen im Inneren versehenen Fußes eine hohe mechanische Stabilität auf, ist jedoch nicht frei von Nachteilen. Bei den gestiegenen Anforderungen an die Leistung der Beleuchtungseinrichtung können zwar die herkömmlichen elektrischen Bauelemente wie Transformatoren durch elektronische Schaltnetzteile (Transistoren etc.) mit geringerer Verlustwärme ersetzt werden. Letztere führt jedoch insbesondere im Dauerbetrieb eines Mikroskops immer noch zu störenden Fokusveränderungen. Eine für die Luftzirkulation förderliche Bauweise des Stativfußes ergibt eine erhöhte Staubbildung und erfordert eine gleichfalls dem Dauerbetrieb hinderliche häufige Reinigung der optischen Bauelemente der Beleuchtungseinrichtung. Außerdem ist durch die Lage der Leuchtfeldblende im Mikroskopstativfuß und die Lage der Aperturblende im Kondensor eine gemeinsame Betätigung dieser Blenden mittels der ihnen zugeordneten Antriebsmittel nicht möglich.

Der Erfindung liegt daher die Aufgabe zugrunde, diese Nachteile zu beheben und einen gattungsgemäßen Mikroskopstativfuß so weiterzubilden, daß bei erleichterter Handhabung der verstellbaren optischen Bauelemente ein Dauerbetrieb des Mikroskops durch Verunreinigung derselben oder aufgrund von Fokusveränderungen durch Wärmeausdehnung möglichst wenig gestört wird.

Gemäß der Erfindung ist diese Aufgabe durch die kennzeichnenden Merkmale des Hauptanspruchs gelöst. Vorteilhafte Ausführungsformen der Erfindung ergeben sich aus den Unteransprüchen.

Weitere Einzelheiten und Merkmale der Erfindung sind aus der folgenden Beschreibung eines in der Zeichnung schematisch dargestellten Ausführungsbeispiels ersichtlich. Es zeigen:

Fig. 1     eine schematische Vorderansicht des erfindungsgemäßen Mikroskopstativfußes im Schnitt, und

Fig. 2     eine Seitenansicht des Mittelteils des erfindungsgemäßen Stativfußes im Schnitt längs der Linie II-II von Fig. 1.

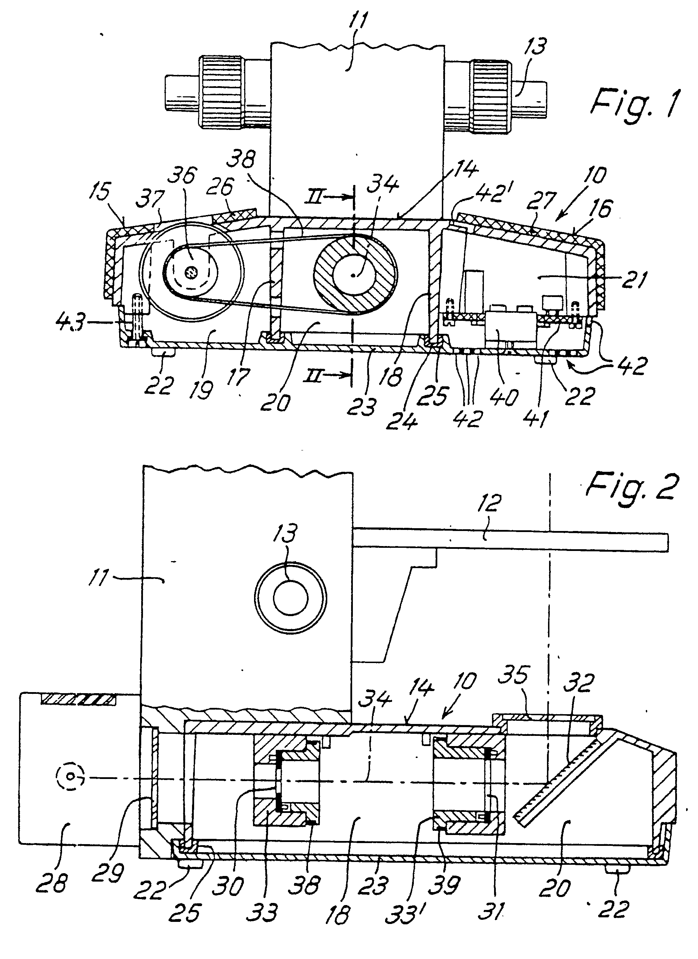

Der in Fig. 1 gezeigte Mikroskopstativfuß 10 ist Bestandteil eines rechtwinkeligen Stativs, von welchem hier lediglich ein senkrechter Ständer 11 mit einem Objekttisch 12 angedeutet ist, der mittels einer Fokussiereinrichtung 13 vertikal verschiebbar ist. Mit dem Ständer 11 einstückig ist ein Mittelteil 14 des Stativfußes 10, an welches sich gleichfalls damit einstückige Seitenteile 15, 16 anschließen. Diese sind durch Trennwände 17, 18 vom Mittelteil 14 abgetrennt, wodurch einzelne Aufnahmekammern 19, 20, 21 gebildet werden. Zur Abdeckung des Stativfußes 10 dient eine mit Füßen 22 versehene Bodenplatte 23, welche mit einer angeformten Rille 24 zur Aufnahme einer wärmeisolierenden Dichtung 25, beispielsweise aus Moosgummi, versehen ist. Beim Befestigen der Bodenplatte 23 am Stativfuß 10 mittels Schrauben 43 greifen die bis zur Bodenplatte 23 reichenden Trennwände 17, 18 in die entsprechend angeordnete Rille 24 der Bodenplatte 23 ein und bilden mittels der Dichtung 25 einen staubdichten Abschluß des Mittelteils 14 von den Seitenteilen 15, 16. Diese sind mit gepolsterten Handauflagen 26, 27 versehen.

Im Mittelteil 14 des Stativfußes 10 sind als optische Bauelemente einer ansetzbaren Beleuchtungseinrichtung 28 hintereinander eine Beleuchtungslinse 29, eine Aperturblende 30, eine Leuchtfeldblende 31 und ein Umlenkspiegel 32 angeordnet (Fig. 2). Die Aperturblende 30 und die Leuchtfeldblende 31 sind jeweils in Blendenträgern 33, 33' eingesetzt, die quer zur optischen Achse 34 der Beleuchtungseinrichtung 28 verschiebbar sind. Oberhalb des Umlenkspiegels 32 ist als Abdeckung eine Plankonvexlinse 35 montiert.

In der Aufnahmekammer 19 des Seitenteils 15 ist eine Antriebseinheit 36 in Form von zwei Rändelrädern befestigt, mit denen die Öffnung der Blenden 30, 31 steuerbar ist. Die Anordnung der Antriebseinheit 36 ist dabei derart getroffen, daß die Rändelräder geringfügig aus einem abgedichteten Spalt 37 der Handauflage 26 hervortreten und in bequemer Fingerreichweite von der Fokussiereinrichtung 13 liegen. Als Antriebsmittel für die Blenden 30,31 sind je ein Zahnriemen 38,39 vorgesehen.

Die Aufnahmekammer 21 des Seitenteils 16 enthält die elektronischen und elektrischen Bauelemente als Schaltnetzteil 40 für die Beleuchtungseinrichtung 28. Das Schaltnetzteil 40 ist zur leichteren Wartung und gegebenenfalls zum Austausch auf einem Träger 41 derart montiert, daß alle wärmeabgebenden Bauelemente (wie beispielsweise Transistoren) mit der Bodenplatte 23 in Kontakt sind. Letztere ist vorzugsweise aus einem gut wärmeleitenden Material gefertigt und mit Lüftungsschlitzen 42 versehen. Weitere Lüftungsschlitze 42' sind im Oberteil der Aufnahmekammer 21 vorgesehen und so ausgebildet, daß durch teilweise Abdeckung mittels der Handauflage 27 ein Schutz des Schaltnetzteiles 40 gegen das Eindringen von Fremdkörpern gegeben ist.

**Patentansprüche**

1. Mikroskopstativfuß zur Aufnahme optischer und elektronischer Bauelemente einer Beleuchtungseinrichtung sowie einer Antriebseinheit für die optischen Bauelemente, mit einem Mittelteil, je einem damit einstückigen, eine Handauflage tragenden Seitenteil und einer den Mikroskopstativfuß abdeckenden Bodenplatte, gekennzeichnet durch folgende Merkmale:
   a.) das Mittelteil (14) und die Seitenteile (15, 16) bilden durch bis zur Bodenplatte (23) reichende Trennwände (17, 18) einzelne Aufnahmekammern (19, 20, 21),
   b.) im Mittelteil (14) sind hintereinanderliegend eine Aperturblende (30), eine Leuchtfeldblende (31) und ein Umlenkspiegel (32) staubgeschützt angeordnet,
   c.) in einem der Seitenteile (16) sind die elektronischen Bauelemente der Beleuchtungseinrichtung (28) angeordnet, und dieses Seitenteil (16) sowie die Bodenplatte (23) sind wärmeableitend ausgebildet und
   d.) im anderen Seitenteil (15) ist eine Antriebseinheit (36) für die Apertur- und Leuchtfeldblende (30, 31) angeordnet, wobei diese Antriebseinheit (36) in der Handauflage (26) versenkt und in Fingerreichweite von einer Fokussiereinrichtung (13) angeordnet ist.

2. Mikroskopstativfuß nach Anspruch 1, **dadurch gekennzeichnet,** daß zwischen den Trennwänden (17, 18) und der Bodenplatte (23) eine wärmeisolierende Dichtung (25) angeordnet ist.

3. Mikroskopstativfuß nach Anspruch 1, **dadurch gekennzeichnet,** daß die elektrischen Bauelemente auf einem Träger (41) derart in der Aufnahmekammer (21) befestigt sind, daß nur die wärmeerzeugenden elektrischen Bauteile mit der Bodenplatte (23) in Kontakt sind.

4. Mikroskopstativfuß nach Anspruch 1, dadurch gekennzeichnet, daß die Bodenplatte (23) mit Füßen (22) sowie Lüftungsschlitzen (42) und das Seitenteil (16) zusätzlich mit Lüftungsschlitzen (42') versehen ist.

5. Mikroskopstativfuß nach Anspruch 1, dadurch gekennzeichnet, daß die Apertur- und Leuchtfeldblende (30, 31) mittels Zahnriemen (38, 39) verstellbar sind.

**Claims**

1. Microscope stand base, for the reception of optical and electronic components of an illuminating equipment as well as of a drive unit for the optical components, with a middle part, a respective side part integral therewith and carrying a hand support and with a base plate covering the microscope stand base, characterised by the following features:
   a) the middle part (14) and the side parts (15, 16) form individual receiving chambers (19, 20, 21) by partitions (17, 18) reaching to the base plate (23),
   b) an aperture stop (30), a radiant field stop (31) and a deflecting mirror (32) are arranged in dustproof manner and one lying behind the other in the middle part (14),
   c) the electronic components of the illuminating equipment (28) are arranged in one of the side parts (16) and this side part (16) as well as the base plate (23) are constructed to be heat-dissipating and
   d) a drive unit (36) for the aperture stop (30) and the radiant field stop (31) is arranged in the other side part (15), wherein this drive unit (36) is arranged to be recessed in the hand support and in finger range from a focussing equipment (13).

2. Microscope stand base according to claim 1, characterised thereby, that a heat-insulating seal (25) is arranged between the partitions (17, 18) and the base plate (23).

**3.** Microscope stand base according to claim 1, characterised thereby, that the electrical components on a carrier (41) are fastened in the receiving chamber (21) in such a manner that only the heat-generating electrical components are in contact with the base plate (23).

**4.** Microscope stand base according to claim 1, characterised thereby, that the base plate (23) is provided with feet (22) as well as ventilation slots (42) and the side part (16) is additionally provided with ventilation slots (42').

**5.** Microscope stand base according to claim 1, characterised thereby, that the aperture and radiant field stop (30, 31) are adjustable by means of toothed belts (38, 39).

**Revendications**

**1.** Pied pour microscope pour la réception de composants optiques ou électroniques d'une installation d'éclairage ainsi que d'une unité d'entraînement pour les composants optiques, avec une partie centrale, une partie latérale sur chaque côté, réalisée en une pièce avec la partie centrale et portant un appui de main et une plaque de fond recouvrant le pied de microscope, caractérisé par les caractéristiques suivantes :

a) la partie centrale (14) et les parties latérales, (15, 16,) forment des chambres de réception individuelles (19, 20, 21) à l'aide de cloisons (17, 18) s'étendant jusqu'à la plaque de fond (23),

b) dans la partie centrale (14) sont disposés, successivement, un diaphragme d'ouverture (30), un diaphragme limitant de champ lumineux (31) et un miroir de renvoi (32), de façon à protéger contre la poussière,

c) dans une des parties latérales (16) sont disposés les composants électroniques de l'installation d'éclairage (28) et cette partie latérale (16) ainsi que la plaque de fond (23) sont réalisées de façon à être conductrices de chaleur et

d) dans l'autre partie latérale (15) est disposée une unité d'entraînement (36) pour les diaphragmes d'ouverture et de champ lumineux (30, 31), l'unité d'entraînement (36) étant escamotée dans l'appui de main (26) et disposée à une distance de portée des doigts d'un dispositif de focalisation (13).

**2.** Pied pour microscope selon la revendication 1, caractérisé en ce qu'un joint d'étanchéité calorifuge (25) et disposé entre les cloisons (17, 18) et la plaque de fond (23).

**3.** Pied pour microscope selon la revendication 1, caractérisé en ce que les composants électriques sont fixés sur un support (41) dans la chambre réceptrice (21) de telle façon que seulement les composants électriques producteurs de chaleur sont en contact avec la plaque de fond (23).

**4.** Pied pour microscope selon la revendication 1, caractérisé en ce que la plaque de fond (23) est pourvue de pieds (22) ainsi que de fentes d'aération (43), et la partie latérale (16) est pourvue supplémentairement de fentes d'aération (42')

**5.** Pied pour microscope selon la revendication 1, caractérisé en ce que les diaphragmes d'ouverture et de champ lumineux (30, 31) sont réglables à l'aide de courroies dentées (38, 39).

Fig. 1

Fig. 2